# DEMANDE DE BREVET EUROPEEN

(11) **EP 4 717 124 A1**
(43) Date de publication de la demande: **01.04.2026**
(21) Numéro de dépôt: 25204996.0
(22) Date de dépôt: 26.09.2025
(51) Int. Cl.: A47C 7/02, A47C 23/00, A47C 23/043, A47C 27/06, B33Y 80/00, B60N 2/70

(54) **ÉLÉMENT DE MATELASSURE À VARIATION CONTINUE DE COMPORTEMENT MÉCANIQUE**

(30) Priorité: 27.09.2024 FR 2410353
(71) Demandeur: Renault s.a.s, 92100 Boulogne Billancourt (FR); Commissariat à l'Energie Atomique et aux Energies Alternatives, 75015 Paris (FR)
(72) Inventeur: BRIN, Eric, 78280 Guyancourt (FR); GLEYZE, Hervé, 38000 Grenoble (FR)
(74) Mandataire: Ipsilon

(57) **Abrégé**

L'invention concerne un élément de matelassure (10) monolithique architecturé en treillis comprenant :
- un treillis de corps (1),
- un treillis superficiel (11),

dans lequel le treillis de corps (1) comprend au moins deux brins (36) reliés entre eux chacun par une extrémité proximale de brin,
caractérisé en ce que la section de brin desdits au moins deux brins est variable le long de leur axe de brin respectif de manière continue depuis une extrémité distale d'un premier brin parmi lesdits au moins deux brins vers une extrémité distale d'un deuxième brin parmi lesdits au moins deux brins de sorte que le comportement mécanique du premier brin diffère de celui du deuxième brin lorsque le treillis de corps est soumis à une sollicitation extérieure, notamment un effort appliqué au treillis superficiel.

## Description

### Domaine technique

La présente invention concerne le domaine des structures architecturées en treillis, notamment pour former des dispositifs comportant une interface souple, par exemple molletonnée. Ces structures architecturées en treillis peuvent être destinées à absorber un choc et/ou à former un appui corporel, tel qu'une assise d'un siège, un coussin, un matelas, un accoudoir, un appui-tête, un repose-poignet, une poignée de préhension ou un rembourrage de casque.

### Arrière-plan technologique

Il existe un type de structure architecturée en treillis comprenant un treillis de corps et un treillis superficiel solidaire de ce treillis de corps. Ce treillis superficiel forme une peau recouvrant au moins en partie le treillis de corps. Le treillis superficiel augmente la surface de contact de la structure architecturée en treillis sans influencer de manière conséquente les propriétés mécaniques en compression de cette dernière qui sont majoritairement déterminées par le treillis de corps. Cet agencement comprenant un treillis de corps et un treillis superficiel est particulièrement avantageux lorsque l'élément de matelassure est destiné à absorber un choc et/ou à former un appui corporel.

Lorsqu'un utilisateur repose une partie de son corps sur une telle structure, la répartition des efforts de pression sur cette structure n'est pas uniforme. Les efforts de pression sont notamment plus importants au niveau des zones de contact entre la structure et l'utilisateur. Ensuite, les efforts de pression sont également variables au niveau de ces zones de contact en fonction de la position de l'utilisateur et de sa façon de solliciter la structure. Ces différences de sollicitation de la structure peuvent entrainer pour l'utilisateur une sensation d'inconfort ou de manque de maintien.

Une difficulté pour adapter la structure architecturée en treillis pour pallier ces différences de sollicitation est que la modification des motifs élémentaires formant la structure peut avoir un impact négatif sur les conditions aux limites de la structure, la dépoudrabilité de la structure à l'issue de la fabrication additive ou sur l'aspect esthétique en superficie de la structure.

Il existe donc un besoin pour un élément de matelassure monolithique architecturée en treillis surmontant ces inconvénients.

### Résumé de l'invention

Pour cela, l'invention propose un élément de matelassure monolithique architecturé en treillis comprenant :
- un treillis de corps comportant une pluralité de motifs élémentaires de corps répétés périodiquement et en contact les uns avec les autres, chaque motif élémentaire de corps comprenant une pluralité de brins reliés entre eux par au moins une extrémité et étant au contact d'au moins un brin d'un motif élémentaire de corps adjacent, chaque brin s'étendant le long d'un axe de brin,
- un treillis superficiel recouvrant au moins partiellement le treillis de corps de manière à former une face externe de l'élément de matelassure, ledit treillis superficiel étant au contact et formé intégralement avec ledit treillis de corps, le treillis superficiel comportant une pluralité de motifs élémentaires superficiels répétés périodiquement,
dans lequel le treillis de corps comprend au moins deux brins reliés entre eux chacun par une extrémité proximale de brin, lesdits au moins deux brins appartenant à deux motifs élémentaires différents et en contact l'un avec l'autre, caractérisé en ce que la section de brin desdits au moins deux brins est variable le long de leur axe de brin respectif de manière continue depuis une extrémité distale d'un premier brin parmi lesdits au moins deux brins vers une extrémité distale d'un deuxième brin parmi lesdits au moins deux brins de sorte que le comportement mécanique du premier brin diffère de celui du deuxième brin lorsque le treillis de corps est soumis à une sollicitation extérieure, notamment un effort appliqué au treillis superficiel.

Une variation continue de la section de brins consécutifs induit une réponse mécanique variable des brins lorsque ceux-ci sont sollicités par un effort de pression sur le treillis superficiel, par exemple quand un utilisateur s'assoie ou repose sur le treillis superficiel. Cette réponse mécanique différente s'illustre notamment par une raideur différente. Il est ainsi possible de faire varier la raideur des brins de manière continue d'un brin à l'autre.

La variation de section de brin s'étend de manière continue le long de plusieurs brins. Ainsi, dans une variation continue de section entre un premier et deuxième brins reliés entre eux par leur extrémité proximale, la section de brin du premier brin au niveau de l'extrémité proximale du premier brin est identique à la section de brin du deuxième brin au niveau de l'extrémité proximale du deuxième brin. Il y a ainsi continuité de la section de brin entre les premier et deuxième brins. Cette continuité de section permet d'obtenir une continuité de la réponse mécanique de ces brins et donc du treillis de corps ce qui améliore la sensation de confort de l'utilisateur.

On entend par « variation continue » de la section de brin le fait que la fonction décrivant l'évolution de la section de brin le long de l'axe de brin présente une dérivée du premier ordre en tout point.

Au contraire, une « variation discontinue » de la section de brin correspond à une variation discrète de cette section. Un exemple d'une telle variation discontinue serait un premier brin d'une première valeur de section (e.g. première valeur de diamètre) relié à un brin d'une deuxième valeur de section (e.g. deuxième valeur de diamètre).

Ainsi, la section de brin varie d'un motif élémentaire de corps à un autre motif élémentaire de corps adjacent pour faire varier les propriétés mécaniques entre ces motifs élémentaires de corps.

Selon un mode de réalisation de l'élément de matelassure, la section de brin desdits au moins deux brins est variable de manière progressive depuis l'extrémité distale du premier brin vers l'extrémité distale du deuxième brin. Il y a donc une augmentation de la section de brin depuis une extrémité distale du premier brin vers l'extrémité distale du deuxième brin. En sens opposé, la variation de section de brin est donc dégressive.

Selon un mode de réalisation de l'élément de matelassure, la section de brin desdits au moins deux brins est variable de manière à former un gradient continu de variation de section le long d'au moins une direction de gradient. On entend par « gradient de variation de section » le fait que la section de brin varie spatialement.

Il y a donc une distribution organisée de la variation de section à l'intérieur du treillis de corps. Cette distribution est de préférence organisée en fonction d'une sollicitation extérieure prédéterminée appliquée sur le treillis de corps. Cette distribution est donc de préférence déterminée en fonction d'un ou plusieurs parmi la nature, la position ou bien l'intensité des efforts de pression prédéterminés appliqués au treillis de corps, ou plus généralement à l'élément de matelassure. Il en résulte une réponse mécanique ou un comportement mécanique choisi pour améliorer le confort de l'utilisateur.

Le gradient de variation de section le long de ladite au moins une direction de gradient est obtenu au moyen de la variation de section de brin d'une pluralité de brins le long de leur axe de brin respectifs.

La direction de gradient est par exemple une direction transversale à une portion du treillis superficiel sur laquelle un effort de pression appliqué par l'utilisateur est prévue. Le gradient de variation de section le long de cet axe peut ainsi prévoir une raideur variable le long de cette direction pour donner une déformation du treillis de corps variable le long de cette direction. En prévoyant une raideur de brins « de surface » disposés à proximité du treillis superficiel inférieure à celle de brins « profonds » disposés à l'opposé du treillis de corps par rapport au treillis superficiel, la déformation du treillis de corps sera plus importante dans un premier temps suivant la sollicitation par l'utilisateur pendant lequel les brins de surface sont sollicités et moins importante dans un second temps suivant le premier temps pendant lequel les brins profonds sont sollicités.

La section de brin desdits au moins deux brins peut également être variable de manière à former un gradient continu de variation de section le long d'une pluralité de directions de gradient.

Selon un mode de réalisation de l'élément de matelassure, la section de brin desdits au moins deux brins est variable de manière à former un gradient continu de variation de section le long d'une pluralité directions de gradient depuis une zone de départ vers un bord externe, ou une surface externe, du treillis de corps. Il est ainsi possible de complexifier la distribution de la variation de section pour améliorer encore la perception par l'utilisateur. Il est ainsi possible notamment de réaliser un gradient bidimensionnel ou tridimensionnel.

Selon un mode de réalisation de l'élément de matelassure, la zone de départ est ponctuelle ou s'étend le long d'au moins une direction de zone. Lorsque la zone de départ est ponctuelle, on peut parler d'épicentre du gradient.

Selon un mode de réalisation de l'élément de matelassure, la pluralité de directions sont comprises dans un même plan de gradient. La distribution de variation de section est donc bidimensionnelle dans ce cas.

La section des brins de corps du treillis de corps peut être constante le long d'un axe perpendiculaire à ce plan de gradient.

Selon un mode de réalisation de l'élément de matelassure, le treillis de corps définit un premier, un deuxième et un troisième axes de corps perpendiculaires les uns par rapport aux autres, le troisième axe définissant une épaisseur du treillis de corps, ladite au moins une direction de gradient comprenant au moins l'un parmi les axes de corps.

Les premier, deuxième et troisième axes de corps sont de préférence déterminés en fonction d'une orientation de l'élément de matelassure. En particulier, les motifs élémentaires de corps sont agencés les uns par rapport aux autres suivant ces trois axes de corps pour obtenir une architecture cartésienne, ordonnée et périodique.

La section des brins de corps du treillis de corps peut être constante le long du troisième axe de corps.

Selon un mode de réalisation de l'élément de matelassure, le plan de gradient comprend les premier et deuxième axes de corps. Ceci indique que le gradient de variation de section est réalisé perpendiculairement au troisième axe de corps, donc transversalement à l'épaisseur du treillis de corps.

Selon un mode de réalisation de l'élément de matelassure, le treillis de corps est stratifié de sorte qu'il comprend au moins une première et une deuxième couches de corps superposées l'une sur l'autre et comprenant chacune une pluralité de motifs élémentaires de corps répétés périodiquement et en contact les uns avec les autres, les motifs élémentaires de corps de la première couche présentant au moins une caractéristique géométrique différente par rapport aux motifs élémentaires de la deuxième couche.

Ladite au moins une caractéristique géométrique comprend l'un ou plusieurs parmi une dimension transversale de brin, une forme de section brin et une variation de section.

Les couches de corps sont de préférence superposées les unes sur les autres le long du troisième axe de corps. En d'autres termes, les couches de corps forment ici différentes épaisseurs du treillis de corps.

Ainsi, le comportement mécanique peut être différent d'une couche de corps à une autre. Une couche de corps peut être dépourvue de gradient de variation de section et ainsi conserver une section de brin constante dans ladite couche de corps.

Le treillis de corps peut également comprendre au moins trois couches de corps avec une couche additionnelle disposée entre les première et deuxième couches de corps. La couche additionnelle peut être déterminée pour former une transition de section depuis la première couche de corps vers la deuxième couche de corps. Cette transition peut être réalisée par une dimension constante de section de brin dans la couche additionnelle ou bien par un gradient de variation de section. La dimension constante de section de brin peut être choisie comme la dimension de section de la première ou de la deuxième couches à l'interface avec la couche additionnelle.

Il est également proposé une matelassure de siège pour un siège de véhicule comprenant un élément de matelassure tel que décrit ci-dessus, le treillis superficiel définissant une zone de contact destinée à être au contact d'une zone du corps d'un utilisateur, lesdits au moins deux brins étant disposés au niveau de la zone de contact.

On entend par « au niveau de la zone de contact », le fait que lesdits au moins deux brins sont disposés le long d'un axe passant par la zone de contact, par exemple un axe perpendiculaire au treillis superficiel ou le long du troisième axe de corps.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1 représente une vue en perspective d'un exemple d'élément de matelassure architecturé en treillis définissant un premier, un deuxième et un troisième axes de corps, et comprenant un treillis de corps à deux couches de motifs élémentaires de corps ;
[fig. 2] La figure 2 représente une vue de côté d'un autre exemple d'élément de matelassure dans un plan perpendiculaire au deuxième axe de corps, le treillis de corps comprenant trois couches de motifs élémentaires de corps;
[fig. 3] La figure 3 représente une vue de côté d'une structure architecturée en treillis comprenant un treillis superficiel et un treillis de corps ;
[fig. 4] La figure 4 représente une vue en perspective de la structure architecturée en treillis de la figure 3 ;
[fig. 5] La figure 5 représente une vue en perspective d'un motif élémentaire de corps du treillis de corps de la figure 3 ;
[fig. 6] La figure 6 représente une vue dans le plan formé par les premier et troisième axes de corps d'un exemple de treillis de corps ayant des brins de corps dont la section de brin varie le long de leur axe de brin ;
[fig. 7] La figure 7 représente une vue en perspective d'un exemple de treillis de corps présentant un gradient de variation de section dans une pluralité de direction de gradient, sans variation de section le long du troisième axe de corps ;
[fig. 8] La figure 8 représente une vue en coupe du treillis de corps dans un plan formé par les premier et troisième axes de corps d'un gradient de variation de section de brin dont la trajectoire est rectiligne et parallèle au premier axe de corps.
[fig. 9] La figure 9 représente une vue en coupe du treillis de corps dans un plan formé par les premier et troisième axes de corps d'un gradient de variation de section de brin dont la trajectoire est perpendiculaire à une surface de référence, ici une surface supérieure de l'élément de matelassure.
[fig. 10] La figure 10 représente une vue du treillis de corps dans un plan formé par les premier et troisième axes de corps, dans laquelle le treillis de corps comprend une première couche de corps avec gradient de variation de section et une deuxième couche de corps homogène, les première et deuxième couches de corps étant stratifiées ;
[fig. 11] La figure 11 représente une vue du treillis de corps dans un plan formé par les premier et troisième axes de corps, dans laquelle le treillis de corps comprend une première couche de corps avec gradient de variation de section ainsi qu'une deuxième et une troisième couches de corps homogènes, les première, deuxième et troisième couches de corps étant stratifiées.

### Description de mode(s) de réalisation

Par souci de clarté, les mêmes références désignant les mêmes éléments selon l'état de l'art et selon l'invention sont utilisées pour toutes les figures.

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en œuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

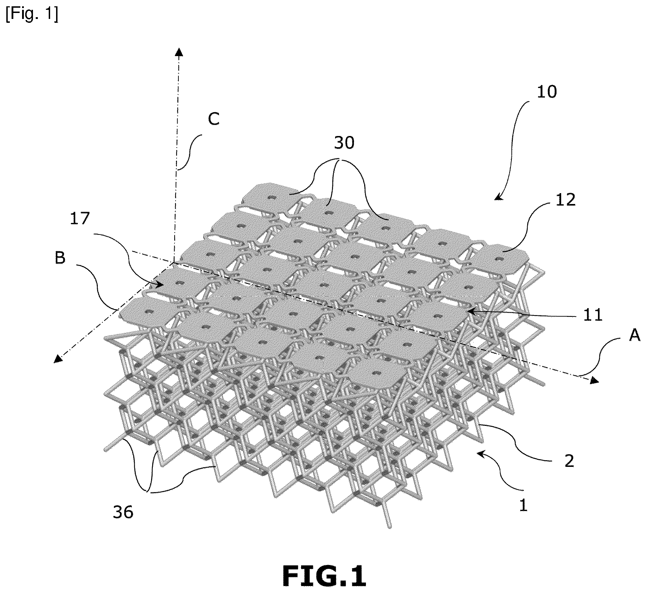

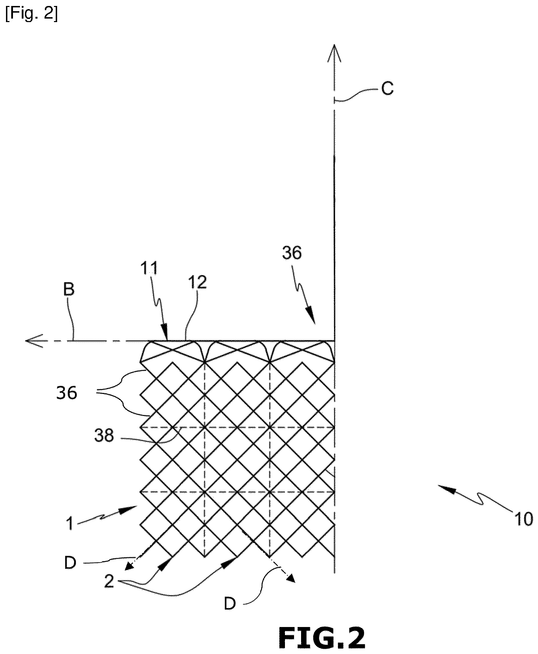

En référence aux figures 1 et 2, un élément de matelassure 10 monolithique architecturé en treillis comprend un treillis de corps 1 et un treillis superficiel 11.

Le treillis de corps 1 comprend une pluralité de motifs élémentaires de corps 2 répétés périodiquement et en contact les uns avec les autres.

Chaque motif élémentaire de corps 2 comprend une pluralité de brins de corps 36 reliés entre eux par au moins une extrémité et étant au contact d'au moins un brin de corps d'un motif élémentaire de corps 2 adjacent. Chaque brin s'étendant le long d'un axe de brin D.

Chaque brin de corps 36 présente une section de brin, définie transversalement à son axe de brin D. Cette section de brin peut être de toute forme, par exemple circulaire. La section de brin présente une dimension de section correspondant à une dimension maximale transversale passant par l'axe de brin D. La dimension de la section de brin est par exemple un diamètre quand la section de brin est circulaire.

Les brins de corps 36 peuvent être agencés de toute manière permettant aux motifs élémentaires de corps 2 d'être au contact les uns des autres et de se répéter pour former le treillis de corps. Ainsi, les brins de corps 36 peuvent être agencés sous la forme d'un carré, d'un rectangle ou d'une forme plus complexe. Les brins peuvent par exemple être agencés sous la forme d'une étoile avec les brins de corps 36 reliés ensemble au niveau d'une extrémité disposé au centre du motif élémentaire de corps 2.

Tel que visible sur la figure 2, chaque motif élémentaire de corps 2 comprend au moins une face latérale 38 destinée à être au contact d'une face latérale 38 d'un motif élémentaire de corps 2 qui lui est adjacent. Ce contact est réalisé au niveau de zones de contact du motif élémentaire de corps 2. Ces zones de contact sont par exemple formées par les sommets des brins de corps 36.

Chacune des zones de contact d'une même face latérale 38 s'étend de préférence dans un même plan de contact. Ainsi, chaque motif élémentaire de corps 2 est formé de sorte que les sommets de brins de corps 36 s'étendent sur une même face latérale 38 au sein de ce plan de contact.

Le treillis superficiel 11 recouvre au moins partiellement le treillis de corps 1 de manière à former une face externe de l'élément de matelassure 10. Le treillis superficiel 11 est au contact et formé intégralement avec le treillis de corps 1. Le treillis superficiel comporte une pluralité de motifs élémentaires superficiels 12 répétés périodiquement.

Les motifs élémentaires superficiels 12 forment ensemble une peau 17. En particulier, chaque motif élémentaire superficiel 12 forme une portion de peau 30.

Le treillis de corps 1 définit un premier axe de corps A, un deuxième axe de corps B et un troisième axe de corps C. Les premier A, deuxième B et troisième C axes de corps sont perpendiculaires les uns par rapport aux autres et forme un repère orthonormé.

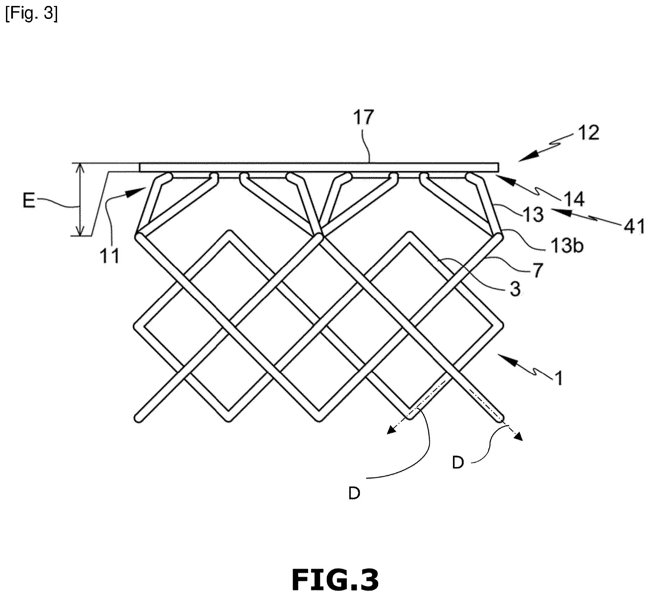

En référence à la figure 3, l'élément de matelassure 10 comprend de préférence également un treillis d'appui 41 comportant une pluralité de motifs élémentaires d'appui répétés périodiquement et solidaires entre eux. Ce treillis d'appui 41 est disposé entre et solidaire du treillis de corps 1 et du treillis superficiel 11.

De manière alternative, l'élément de matelassure 10 peut être dépourvu de treillis d'appui 41. Dans ce cas, l'élément de matelassure 10 comprend de préférence un treillis superficiel 11 directement au contact du treillis de corps 1.

De préférence, le treillis d'appui 41 ou intermédiaire présente un comportement en compression dans une direction perpendiculaire au treillis superficiel 11 différent de celui du treillis de corps 1. L'élément de matelassure présente ainsi une stratification, chaque couche de cette stratification pouvant présenter une fonction ou un comportement mécanique différent. Le treillis d'appui 41 peut ainsi présenter une résistance à la compression moindre que le treillis de corps 1 pour augmenter le confort de l'utilisateur tout en garantissant une retenue ou une absorption satisfaisantes.

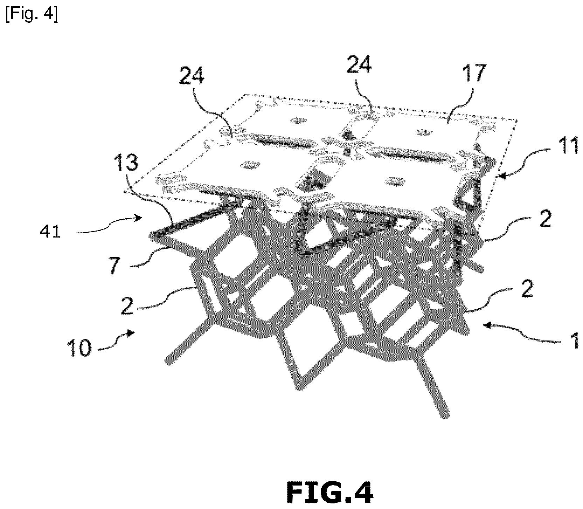

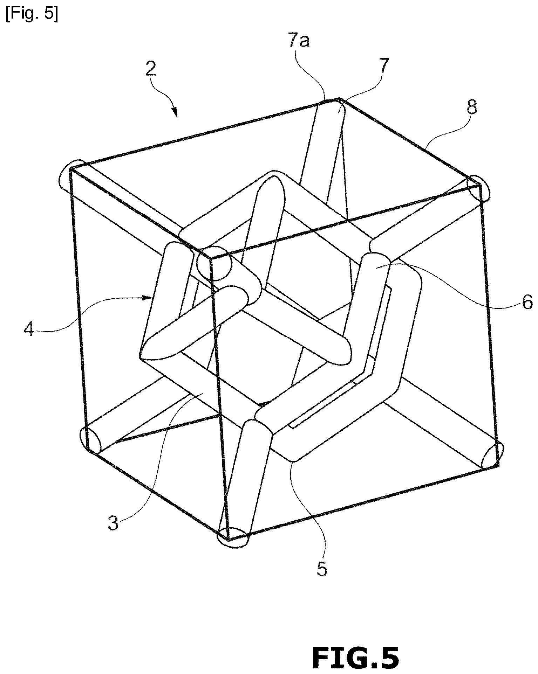

Un exemple d'architecture en treillis est illustré en référence aux figures 3 à 5. L'invention n'est pas limitée à cette architecture spécifique, notamment au niveau géométrique.

Le treillis de corps 1 est formé d'une pluralité de motifs élémentaires de corps 2 de type dodécaédrique rhombique répétés périodiquement et en contact les uns avec les autres. Le motif élémentaire de corps 2 comprend vingt-quatre brins centraux 3 liés entre eux de sorte à former les arêtes d'un dodécaèdre rhombique 4. Le dodécaèdre rhombique 4 comprend six sommets à angles aigus 5 et huit sommets à angles obtus 6. Un sommet à angle aigu 5 est un sommet où quatre faces du dodécaèdre rhombique 4 se rencontrent sur leurs angles aigus. Un sommet à angle obtus 6 est un sommet où trois faces du dodécaèdre rhombique 4 se rencontrent sur leurs angles obtus. Le motif élémentaire 2 est inscrit dans une cellule élémentaire 8, qui correspond au parallélépipède rectangle circonscrit à chacun des sommets à angles aigus 5. Le motif élémentaire 2 comprend également huit brins de liaison 7, chacun reliant un des sommets à angles obtus 6 au sommet le plus proche de la cellule élémentaire 8. Les brins de liaison 7 s'étendent le long des diagonales de la cellule élémentaire 8.

Le motif élémentaire de type dodécaédrique rhombique 2 est similaire au motif dénommé « fluorite » dans le logiciel « nTopology 3.26.3 » développé et commercialisé par la société nTopology, INC. En effet, il est similaire à une structure cristalline de la fluorite pour laquelle chacun des sites atomiques auraient été reliés entre eux par des brins.

Les motifs élémentaires de type dodécaédrique rhombique 2 adjacents sont fixés entre eux par contact entre leurs brins de liaison 7 respectifs et par contact entre leurs sommets à angle aigu respectifs.

Le treillis d'appui 41 comprend quatre pieds 13 et un bloc d'appui 14.

Chacun des pieds 13 est constitué d'une unique branche comprenant une extrémité 13a fixée au bloc d'appui 14. L'unique branche du pied 13 comprend également une autre extrémité 13b, opposée à l'extrémité 13a et fixée à un des brins de liaison 7 du treillis de corps 1.

Dans l'exemple des figures 3 à 5, les brins de corps 36 sont formés par les brins centraux 3 et les brins de liaison 7.

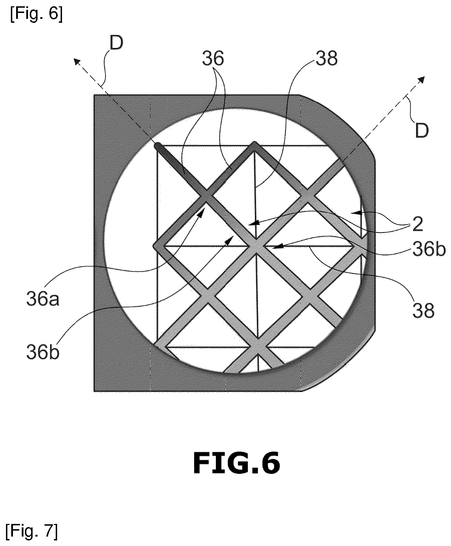

En référence à la figure 6, une pluralité de motif élémentaires de corps sont modélisés et comprennent des brins de corps disposés sous la forme d'une étoile ou d'une croix. Dans cet exemple, chaque motif élémentaire de corps 2 comprend quatre brins de corps 36 dans le plan formé par les deuxième B et troisième C axes de corps.

Chaque brin de corps 36 comprend une extrémité distale 36a et une extrémité proximale 36b. Chaque motif élémentaire de corps 2 est relié à un autre motif élémentaire de corps 2 par une extrémité proximale 36b d'un brin de corps 36. Les brins de corps 36 appartenant à des motifs élémentaires de corps adjacents sont donc reliés entre eux par leur extrémité proximale 36b.

La section de brin des brins de corps 36 est variable le long de leur axe de brin D respectif de manière continue depuis une extrémité distale 36a d'un premier brin de corps 36 vers une extrémité distale 36a d'un deuxième brin de corps 36 de sorte que le comportement mécanique du premier brin diffère de celui du deuxième brin lorsque le treillis de corps est soumis à une sollicitation extérieure, notamment un effort appliqué au treillis superficiel.

En d'autres termes, la section de brin varie d'un motif élémentaire de corps 2 à un autre motif élémentaire de corps 2 adjacent pour faire varier les propriétés mécaniques entre ces motifs élémentaires de corps 2.

La différence de section de brin est illustrée sur la figure 6 par une variation de la densité de points ou nuance de gris le long des brins de corps 36. On peut voir que cette variation est continue de brin de corps 36 en brin de corps 36 et de motif élémentaire de corps 2 en motif élémentaire de corps 2.

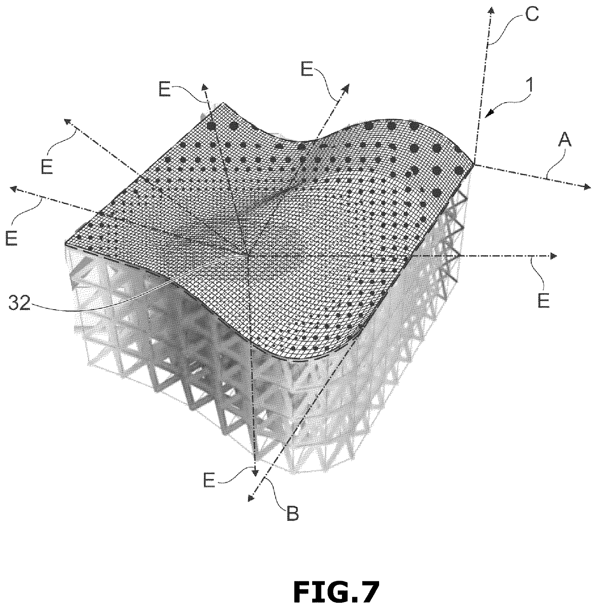

En référence à la figure 7, une modélisation d'un treillis de corps 1 est illustrée dans laquelle un gradient de variation de section est appliqué au treillis de corps 1. Ce gradient de variation de section est ici orienté le long d'une pluralité de directions de gradient E s'étendant depuis une zone de départ 32 vers un bord externe du treillis de corps.

La différence de section de brin est illustrée sur la figure 7 par une variation de la densité de points ou nuance de gris le long des brins de corps 36. On peut voir que cette variation est continue de brin de corps 36 en brin de corps 36 et de motif élémentaire de corps 2 en motif élémentaire de corps 2.

La section de brin des brins de corps 36 est ici constante le long du troisième axe de corps C de sorte que la section de brin est la même quelle que soit la position de brins le long de ce troisième axe de corps C pour une position donnée dans le plan formé par les premier A et deuxième B axes de corps.

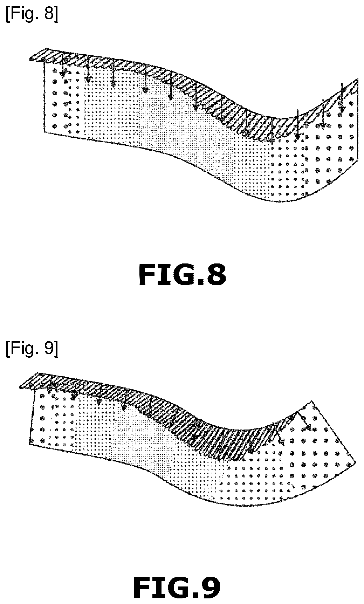

En référence aux figures 8 et 9, le gradient de variation de section peut avoir une trajectoire de distribution rectiligne et parallèle à l'un parmi les premier A, deuxième B ou troisième C axes de corps, comme sur la figure 8, ou bien avoir trajectoire de distribution suivant l'orientation des motifs élémentaires de corps 2, comme sur la figure 9. Sur la figure 9, la trajectoire du gradient de variation de section est perpendiculaire à une surface de référence, ici une surface supérieure de l'élément de matelassure. La direction du gradient de variation de section n'est ainsi pas colinéaire/parallèle à un axe spécifique mais normal en tout point à cette surface de référence (ex : surface de contact avec occupant).

En particulier, le gradient de variation de section de brin présente une trajectoire s'étendant le long du premier axe de corps sur la figure 8.

Ainsi, la section de brin est constante le long de l'un parmi les premier A, deuxième B ou troisième C axes de corps sur la figure 8. Tandis que la section de brin est constante le long d'un axe perpendiculaire à la surface externe supérieure du treillis de corps 1, ou bien au treillis superficiel 11, sur la figure 9.

La trajectoire du gradient de section sur la figure 8 est rectiligne tandis que la trajectoire du gradient de section sur la figure 9 est curviligne.

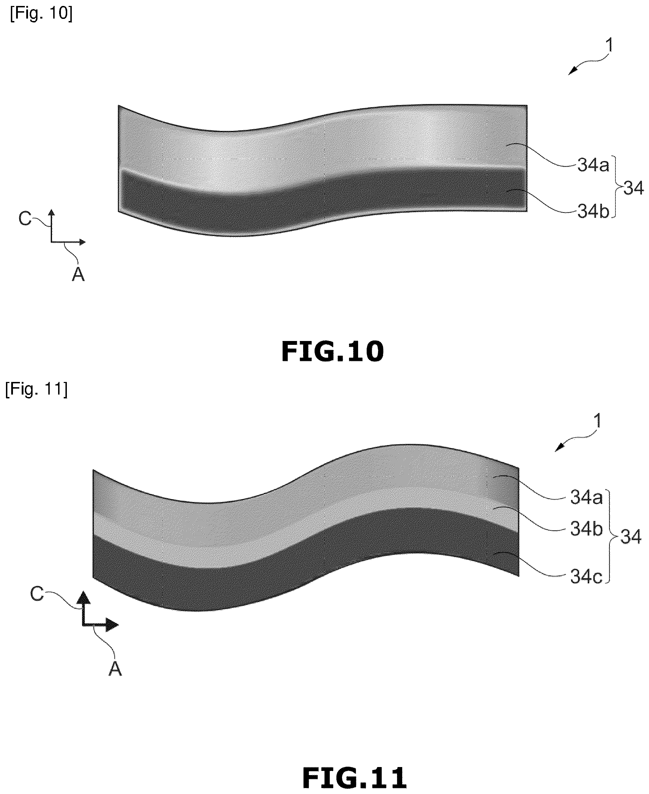

En référence aux figures 10 et 11, le treillis de corps 1 peut être stratifié et comporter une pluralité de couches de corps 34.

Le treillis de corps 1 comprend par exemple deux couches de corps sur l'exemple illustré sur la figure 10 et trois couches de corps sur l'exemple illustré sur la figure 11. Un gradient de variation de section est ici réalisé dans une seule parmi les couches de corps 34.

De manière plus générale, les motifs élémentaires de corps 2 d'une première couche 34a présentent au moins une caractéristique géométrique différente par rapport aux motifs élémentaires de corps 2 d'une deuxième couche de corps 34b, le cas échéant d'une troisième couche de corps 34b.

La section de brin dans la deuxième couche de corps 34b est de préférence choisie pour réaliser une transition de section depuis la première couche de corps 34a vers la troisième couche de corps 34c. La section de brin dans la deuxième couche de corps 34b est par exemple choisie pour correspondre à une valeur moyenne du domaine global de variation de section de brin dans la première couche de corps 34a.

La couche de corps 34 de fond disposée à l'opposé du treillis de corps 1 par rapport au treillis superficiel 11, i.e. la deuxième couche de corps 34b dans l'exemple de la figure 10 et la troisième couche de corps 34c dans l'exemple de la figure 11, peut également avoir peut servir de couche buttoir. Ainsi, la section de brin dans cette couche de corps 34 de fond est de préférence choisie pour limiter les risques d'un talonnement, i.e. d'un écrasement total du treillis de corps 1 entrainant un choc de l'utilisateur sur un support disposé sous l'élément de matelassure 10. La section de brin dans cette couche de corps de fond 34 est donc de préférence supérieure à la section de brin dans la première couche 34a, le cas échant dans chacune des première 34a et deuxième 34b couches de corps.

## Revendications

1. Elément de matelassure (10) monolithique architecturé en treillis comprenant :
- un treillis de corps (1) comportant une pluralité de motifs élémentaires de corps (2) répétés périodiquement et en contact les uns avec les autres, chaque motif élémentaire de corps (2) comprenant une pluralité de brins reliés entre eux par au moins une extrémité et étant au contact d'au moins un brin d'un motif élémentaire de corps (2) adjacent, chaque brin s'étendant le long d'un axe de brin,
- un treillis superficiel (11) recouvrant au moins partiellement le treillis de corps de manière à former une face externe de l'élément de matelassure (10), ledit treillis superficiel (11) étant au contact et formé intégralement avec ledit treillis de corps (1), le treillis superficiel (11) comportant une pluralité de motifs élémentaires superficiels (12) répétés périodiquement,
dans lequel le treillis de corps (1) comprend au moins deux brins (36) reliés entre eux chacun par une extrémité proximale (36b) de brin, lesdits au moins deux brins (36) appartenant à deux motifs élémentaires de corps (2) différents et en contact l'un avec l'autre,
**caractérisé en ce que** la section de brin desdits au moins deux brins est variable le long de leur axe de brin respectif de manière continue depuis une extrémité distale (36a) d'un premier brin parmi lesdits au moins deux brins vers une extrémité distale (36a) d'un deuxième brin parmi lesdits au moins deux brins de sorte que le comportement mécanique du premier brin diffère de celui du deuxième brin lorsque le treillis de corps est soumis à une sollicitation extérieure, notamment un effort appliqué au treillis superficiel.

2. Elément de matelassure (10) selon la revendication 1, dans lequel la section de brin desdits au moins deux brins est variable de manière progressive depuis l'extrémité distale du premier brin vers l'extrémité distale du deuxième brin.

3. Elément de matelassure (10) selon la revendication 1 ou 2, dans lequel la section de brin desdits au moins deux brins est variable de manière à former un gradient continu de variation de section le long d'au moins une direction de gradient.

4. Elément de matelassure (10) selon la revendication 3, dans lequel la section de brin desdits au moins deux brins est variable de manière à former un gradient continu de variation de section le long d'une pluralité directions de gradient depuis une zone de départ vers un bord externe du treillis de corps.

5. Elément de matelassure (10) selon la revendication 4, dans lequel la zone de départ est ponctuelle ou s'étend le long d'au moins une direction de zone.

6. Elément de matelassure (10) selon la revendication 4 ou 5, dans lequel la pluralité de directions sont comprises dans un même plan de gradient.

7. Elément de matelassure (10) selon l'une quelconque des revendications 3 à 6, dans lequel le treillis de corps définit un premier, un deuxième et un troisième axes de corps perpendiculaires les uns par rapport aux autres, le troisième axe définissant une épaisseur du treillis de corps, ladite au moins une direction de gradient comprenant au moins l'un parmi les axes de corps.

8. Elément de matelassure (10) selon la revendication 7 en combinaison avec la revendication 6, dans lequel le plan de gradient comprend les premier et deuxième axes de corps.

9. Elément de matelassure (10) selon la revendication 8, dans lequel la section des brins de corps du treillis de corps est constante le long du troisième axe de corps.

10. Elément de matelassure (10) selon l'une quelconque des revendications précédentes, dans lequel le treillis de corps (1) est stratifié de sorte qu'il comprend au moins une première et une deuxième couches de corps superposées l'une sur l'autre et comprenant chacune une pluralité de motifs élémentaires de corps (2) répétés périodiquement et en contact les uns avec les autres, les motifs élémentaires de corps de la première couche présentant au moins une caractéristique géométrique différente par rapport aux motifs élémentaires de la deuxième couche.

11. Matelassure de siège (50) pour un siège de véhicule comprenant un élément de matelassure selon l'une des revendications précédentes, le treillis superficiel définissant une zone de contact destinée à être au contact d'une zone du corps d'un utilisateur, lesdits au moins deux brins étant disposés au niveau de la zone de contact.
